# EUROPÄISCHE PATENTSCHRIFT

(11) **EP 0 418 831 B1**
(45) Veröffentlichungstag und Bekanntmachung des Hinweises auf die Patenterteilung: **18.10.1995**
(21) Anmeldenummer: 90117956.4
(22) Anmeldetag: 18.09.1990
(51) Int. Cl.: H04M 11/02, H04Q 3/58, H04Q 3/62

(54) **Verfahren zur Personensuche in einer Fernsprechnebenstellenvermittlungsanlage mit Hilfe einer Personensucheinrichtung, die zur Personensuche sich voneinander unterscheidende Betriebsarten bereitstellt**
Paging method in a private branch exchange with a paging device providing operation modes for paging different from each other
Méthode de recherche de personne dans un auto-commutateur privé à l'aide d'un dispositif de recherche de personne qui fournit pour la recherche de personnes des modes de fonctionnement qui sont différents l'un de l'autre

(30) Priorität: 21.09.1989 DE 3931533
(43) Veröffentlichungstag der Anmeldung: 27.03.1991
(73) Patentinhaber: SIEMENS AKTIENGESELLSCHAFT, 80333 München (DE)
(72) Erfinder: Hagl, Ernst, D-8000 München 81 (DE)

(56) Entgegenhaltungen:
- DE-A- 2 424 757
- TELCOM REPORT Bd. 6, Nr. 1, Februar 1983, MUNCHEN DE Seiten 23 - 28 MUNKEMER 'PERSONENSUCHEN UBER DAS KOMMUNIKATIONSSYSTEM EMS'

## Beschreibung

Die Erfindung betrifft ein Verfahren zur Personensuche in einer Fernsprechnebenstellenvermittlungsanlage mit zentraler Steuereinrichtung, mit zentraler Speichereinrichtung, sowie mit zentraler Personensucheinrichtung, die jeweils den im Bedarfsfall zu suchenden Personen zugeordnete Rufeinrichtungen umfaßt, an die bei entsprechend vorgewählter Betriebsart der Personensucheinrichtung zusätzlich zu einer Rufsignalisierung die von der zentralen Steuereinrichtung der Personensucheinrichtung übermittelte Teilnehmeranschlußnummer des rufenden Teilnehmers übertragen und von dieser Rufeinrichtung optisch oder akustisch wiedergegeben wird und diese Anschlußnummer des rufenden Teilnehmers zur Verbindung des rufenden Teilnehmers mit dem gerufenen Teilnehmer von jedem beliebigen Teilnehmerapparat der fernsprechnebenstellenvermittlungsanlage ausgenutzt wird.

Personensucheinrichtungen bieten innerhalb von Fernsprechnebenstellenvermittlungsanlagen die Möglichkeit, bestimmte Teilnehmer jederzeit erreichen zu können. Diese Teilnehmer führen dazu ein ortsungebundenes Rufgerät mit sich. Das Vorliegen eines Verbindungswunsches wird dem Teilnehmer durch dieses Gerät signalisiert. Diese Signalisierung kann auf verschiedene Arten und mit unterschiedlichem Informationsumfang erfolgen. In einer einfachen Betriebsart der Personensucheinrichtung erfolgt die Signalisierung durch einen Rufton oder das Aufleuchten einer Signallampe. Dies bedeutet für den gerufenen Teilnehmer, daß er möglichst schnell einen Teilnehmerapparat der fernsprechnebenstellenvermittlungsanlage aufzusuchen hat und sich dort durch eine vorher vereinbarte Kennummer zu erkennen geben muß, wenn die Verbindung zustande kommen soll. Erst durch das Melden erhält er betriebsartbedingt entweder Informationen darüber, wer ihn erreichen will oder er wird direkt mit dem rufenden Teilnehmer verbunden.

Eine andere Möglichkeit der Signalisierung bietet eine Betriebsart, bei der der Rufton - oder die Signallampe - in Kombination mit einer optischen Anzeige auf einem Display - bzw. einer akustischen Ansage über einen Lautsprecher - der Rufeinrichtung ertönt. Ober das Display - bzw. den Lautsprecher - wird bereits zum Zeitpunkt der Signalisierung die Rufnummer des rufenden Teilnehmers zum gerufenen Teilnehmer übertragen. Ein solches System ist schon durch "Telcom Report", Band 6, Februar 1983, Seiten 23-28, bekannt. Dadurch wird der Suchvorgang vom Meldevorgang getrennt. Der gerufene Teilnehmer kann deshalb die gewünschte Verbindung zu einem für ihn passenden Zeitpunkt realisieren. Diese Betriebsart wird fest eingestellt, da die Personen, die über ein Rufgerät verfügen, erwarten, daß ihnen im Falle eines Personenrufes auch die Rufnummer des rufenden Teilnehmers über das Display - oder den Lautsprecher - mitgeteilt wird. Ein ständiger Wechsel der Betriebsart der Personensucheinrichtung mit damit einhergehendem Wechsel des Signalisierungsumfanges würde zur Verwirrung der zu rufenden Personen führen. Ein solcher Wechsel der Betriebsart wäre aber immer dann nötig, wenn die zur Ausführung des Suchauftrages bei der vorgewählten Betriebsart notwendige Rufnummer des rufenden Teilnehmers der Fernsprechnebenstellenvermittlungsanlage nicht bekannt ist.

Diese Rufnummer ist regelmäßig dann nicht bekannt, wenn der Verbindungswunsch von einer externen Fernsprechvermittlungsanlage kommt. Diese Fernsprechvermittlungsanlage kann über eine Quer- oder Amtsverbindungsleitung mit der Fernsprechnebenstellenvermittlungsanlage verbunden sein. Der Fernsprechnebenstellenvermittlungsanlage wird bei einem solchen Verbindungswunsch nur das Ziel des Vermittlungsvorganges mitgeteilt, nicht aber die Teilnehmeranschlußnummer des rufenden Teilnehmers. Wechselt in einem solchen Fall die Betriebsart nicht, so führt dies dazu, daß die Personensuche aufgrund des Informationsmangels nicht möglich ist. Der rufende Teilnehmer wird entweder an einen Vermittlungsplatz umgeleitet oder er erhält das Besetztzeichen.

Die der Erfindung zugrundeliegende Aufgabe ist es, Suchaufträge die zwar grundsätzlich möglich sind aber wegen des Nichtvorhandenseins der Teilnehmeranschlußnummer von der Personensucheinrichtung aufgrund der eingestellten Betriebsart zurückgewiesen werden, dennoch zu ermöglichen.

Erfindungsgemäß wird dies dadurch erreicht, daß die Steuereinrichtung der Fernsprechnebenstellenvermittlungsanlage bei Nichtvorliegen der Anschlußnummer des rufenden Teilnehmers bei Bedarf eine Kenninformation an die Personensucheinrichtung übermittelt, daß durch diese Kenninformation im Speicher der der Fernsprechnebenstellenvermittlungsanlage abgelegte Daten zur Bezeichnung des Leitungssatzes an dem der Suchauftrag die Fernsprechnebenstellenvermittlungsanlage erreicht hat und eine Teilnehmeranschlußnummer des gerufenen Teilnehmers einander zugeordnet werden und daß ein Quittungston, der die Suchauftragsausführung signalisiert, an den Teilnehmerapparat des rufenden Teilnehmers übertragen wird.

Liegt also eine Rufnummer des rufenden Teilnehmers nicht vor, so überprüft die Steuerung der Fernsprechnebenstellenvermittlungsanlage, ob die Personensucheinrichtung in einer Betriebsart arbeitet, die das Mitteilen der Anschlußnummer des rufenden Teilnehmers über das Rufgerät zusätzlich zum Rufton oder zum Leuchten der Signallampe bewirkt. Ist dies der Fall, dann generiert die Steuerung eine Kenninformation, die sie anstelle der erwarteten Anschlußnummer des rufenden Teilnehmers an die Personensucheinrichtung übermittelt. Der gerufene Teilnehmer, den diese Kenninformation erreicht, erkennt aufgrund der ihm bekannten Besonderheiten - blinkende Anzeige am Display oder bestimmte Zahlenwerte - der Kenninformation, daß es sich um keinen gewöhnlichen, aus der eigenen Vermittlungsanlage stammenden Suchauftrag handelt und kann sich infolgedessen sofort zum nächstgelegenen Teilnehmerapparat der Fernsprechnebenstellenvermittlungsanlage begeben und an diesem die ihm übermittelte Kenninformation eingeben. Diese kann eine Nummer oder eine Nummer kombiniert mit einem Sonderzeichen - beispielsweise durch Drücken der an Tastwahlapparaten vorhandenen "Stern"-Taste - sein. Die vom gerufenen Teilnehmer eingegebene Kenninformation erreicht somit die zentrale Steuerung der Fernsprechvermittlungsanlage; der dort ablaufende Steuervorgang ist abhängig von der Art der Kenninformation.

Entspricht die Kenninformation der Rufnummer des gerufenen Teilnehmers, dann greift die Steuerung nach der Feststellung, daß für diese Anschlußnummer ein Suchauftrag vorliegt - z. B. durch gesetztes Flag - auf einen dafür eingerichteten Speicherplatz zu, in dem die Daten über den Leitungssatz, beispielsweise in Form einer Adresse abgelegt sind. Entspricht die Kenninformation den Daten über den Leitungssatz - z. B. einer Nummer - mit deren Hilfe die zentrale Steuerung direkt - wie bei einer Teilnehmeranschlußnummer - oder indirekt - beispielsweise über Adresswandlung - auf den Leitungssatz zugreifen kann, so stellt die Steuerung wie bei üblichen Vermittlungsvorgängen von einem Teilnehmer zu einem anderen Teilnehmer über das Koppelnetz die Verbindung zwischen dem suchenden Teilnehmer und dem gesuchten Teilnehmer her.

Um sicherzustellen, daß der suchende Teilnehmer nicht auflegt und damit ein Herstellen der Gesprächsverbindung unmöglich macht, wird an diesen Teilnehmer ein Quittungston mit bestimmter Frequenz und Pulsdauer übertragen.

Dieses Verfahren ermöglicht es die Vorteile - z. B. unmittelbare Anzeige der Rufnummer des Teilnehmers auf dem Display der Rufeinrichtung - einer Betriebsart der Personensucheinrichtung zu nutzen, ohne dadurch Nachteile - Suchauftrag von außerhalb der Fernsprechnebenstellenvermittlungsanlage unmöglich - in Kauf nehmen zu müssen. Darüberhinaus gewinnt man gegenüber Betriebsarten, die keine Information zusätzlich zum Rufsignal übertragen, den Vorteil, daß bei entsprechend gestalteter Kenninformation der gerufene Teilnehmer unterscheiden kann, ob der Suchwunsch von einer Amtsleitung oder von einer Querleitung stammt.

Gemäß einer Weiterbildung der Erfindung bezeichnet die von der Steuerung der Fernsprechnebenstellenvermittlungsanlage an die Personensucheinrichtung übergebene Kenninformation eine Meldeprozedur. Die dem gerufenen Teilnehmer mitgeteilte Kenninformation und die Rufnummer des gerufenen Teilnehmers müssen an einem Teilnehmerapparat der Vermittlungsanlage gewählt werden. Die durch die Kenninformation bezeichnete Meldeprozedur greift auf eine Tabelle zu, in der die Daten über den Leitungssatz an an dem ein Suchauftrag die Fernsprechnebenstellenvermittlungsanlage erreicht hat, in Abhängigkeit von der Rufnummer eines gerufenen Teilnehmers eingetragen sind. Mit Hilfe der nun verfügbaren Informationen über den Leitungssatz, an dem der rufende Teilnehmer die Fernsprechnebenstellenvermittlungsanlage erreicht hat, stellt die Meldeprozedur - durch Steuerbefehle - die gewünschte Verbindung her.

Dieses Verfahren erlaubt es in besonders einfacher Weise das erfindungsgemäße Verfahren nachträglich in einer bestehenden Nebenstellenfernsprechnebenstellenvermittlungsanlage einzuführen. Es müssen nicht die gesamten Steuerabläufe neu gestaltet werden, sondern es muß lediglich diese Meldeprozedur an die bestehenden Programme angepaßt werden.

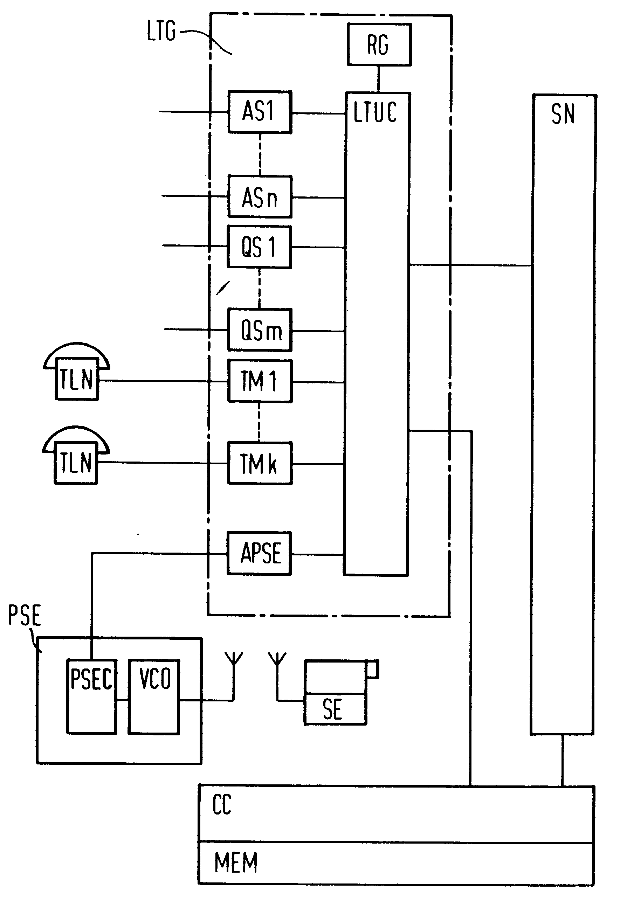

Ein Ausführungsbeispiel der Erfindung, wird nachfolgend im Rahmen einer in der Figur schematisch dargestellten Fernsprechnebenstellenvermittlungsanlage erläutert.

Die Fernsprechnebenstellenvermittlungsanlage setzt sich aus einer zentralen Steuerung CC, einem Zentralspeicher MEM, einem Koppelnetz SN, einer Anschlußgruppe LTG und aus einer Personensucheinrichtung PSE zusammen. Amtsverbindungen werden über Amtssätze AS, Querverbindungen zu anderen Fernsprechnebenstellenvermittlungsanlagen über Quersätze QS und die Verbindung zu den Teilnehmeranschlußgeräten über Internsätze TM hergestellt. Diese bilden gemeinsam mit einem Rufgenerator RG, einer Anschlußgruppensteuerung LTUC und einem Anpassungssatz für Sondereinrichtungen APSE die Anschlußgruppe LTG. Die Personensucheinrichtung PSE ist an den Anpassungssatz für Sondereinrichtungen APSE angekoppelt.

Ein von einer Amtsleitung kommender Verbindungswunsch erreicht die Fernsprechnebenstellenvermittlungsanlage über einen der Amtssätze AS. Die Anschlußgruppensteuerung LTUC meldet den vorliegenden Verbindungswunsch mit Angabe der Rufnummer des gewünschten Teilnehmers und der Adresse des Amtssatzes AS, an dem der Verbindungswunsch die Anlage erreicht hat, an die zentrale Steuerung CC. Die zentrale Steuerung CC stellt fest, daß im zentralen Speicher MEM ein Anrufumleitungsauftrag zur Personensucheinrichtung PSE für die gewünschte Teilnehmeranschlußnummer eingetragen ist. Da der Anruf von außerhalb der Vermittlungsanlage kommt, wird eine spezielle Meldeprozedur für externe Suchaufträge aktiviert. Diese bewirkt, daß in einer Suchtabelle im Zentralspeicher MEM die Rufnummer des gewünschten Teilnehmers gemeinsam mit der Adresse des Amtssatzes AS, an dem der Verbindungswunsch die Vermittlungsanlage erreicht hat, eingetragen wird. Von der zentralen Steuerung CC wird nun die Nummer der Meldeprozedur, die das Format einer gewöhnlichen Teilnehmeranschlußnummer aufweist, und die Anschlußnummer des gerufenen Teilnehmers über die Anschlußgruppensteuerung LTUC und den Anpassungssatz für Sondereinrichtungen APSE zu einer Steuerung der Personensucheinrichtung PSEC übermittelt. Diese aktiviert einen Suchsender VCO, der die Nummer der Meldeprozedur auf dem Funkweg zu einer Rufeinrichtung SE des gewünschten Teilnehmers überträgt. Diese Rufeinrichtung SE zeigt die Nummer der Meldeprozedur auf einem Display an und gibt Rufzeichen über einen Lautsprecher ab.

Gleichzeitig quittiert die Personensucheinrichtung PSE der zentralen Steuerung CC, daß der Suchauftrag ausgeführt wird. Daraufhin aktiviert die zentrale Steuerung CC die Anschlußgruppensteuerung LTUC, die über den Rufgenerator RG und den Amtssatz AS an den rufenden Teilnehmer einen Quittungston sendet.

Der gerufene Teilnehmer meldet sich, indem er an einem beliebigen Teilnehmerapparat TLN der Fernsprechnebenstellenvermittlungsanlage die auf dem Display angezeigte Meldeprozedurnummer und seine eigene Teilnehmeranschlußnummer wählt. Die zentrale Steuerung CC aktiviert daraufhin die Meldeprozedur, die mit Hilfe der vom gerufenen Teilnehmer eingegebenen Teilnehmeranschlußnummer die Tabelle absucht und die der Teilnehmeranschlußnummer zugeordnete Adresse des Amtssatzes AS an die zentrale Steuerung CC übergibt. Diese schaltet über das Koppelnetz SN die Verbindung zwischen dem rufenden Teilnehmer und dem gesuchten Teilnehmer durch, indem sie den Amtssatz AS mit dem Teilnehmerapparat TLN verbindet, von dem sich der gesuchte Teilnehmer meldet.

## Patentansprüche

1. Verfahren zur Personensuche in einer Fernsprechnebenstellenvermittlungsanlage mit zentraler Steuereinrichtung (CC), mit zentraler Speichereinrichtung (MEM), sowie mit zentraler Personensucheinrichtung (PSE), die jeweils den im Bedarfsfall zu suchenden Personen zugeordnete Rufeinrichtungen (SE) umfaßt, an die bei entsprechend vorbestimmter Betriebsart der Personensucheinrichtung (PSE) zusätzlich zu einer Rufsignalisierung die von der zentralen Steuereinrichtung (CC) der Personensucheinrichtung (PSE) übermittelte Teilnehmeranschlußnummer des rufenden Teilnehmers übertragen und von dieser Rufeinrichtung (SE) optisch oder akustisch wiedergegeben wird und diese Anschlußnummer des rufenden Teilnehmers zur Verbindung des rufenden Teilnehmers mit dem gerufenen Teilnehmer von jedem beliebigen Teilnehmerapparat (TLN) der Fernsprechnebenstellenvermittlungsanlage ausgenutzt wird,
**dadurch gekennzeichnet,**
daß die Steuereinrichtung (CC) bei Nichtvorliegen der Anschlußnummer des rufenden Teilnehmers bei Bedarf eine Kenninformation an die Personensucheinrichtung (PSE) übermittelt, daß durch diese Kenninformation im Speicher (MEM) der Fernsprechnebenstellenvermittlungsanlage abgelegte Daten zur Bezeichnung des Leitungssatzes (AS, QS), an dem der Suchauftrag die Fernsprechnebenstellenvermittlungsanlage erreicht hat und eine Teilnehmeranschlußnummer des gerufenen Teilnehmers einander zugeordnet werden und daß ein Quittungston, der die Suchauftragsausführung signalisiert, an den Teilnehmerapparat (TLN) des rufenden Teilnehmers übertragen wird.

2. Verfahren nach Anspruch 1,
**dadurch gekennzeichnet,**
daß die von der Steuerung (CC) der Fernsprechvermittlungsanlage an die Personensucheinrichtung (PSE) übergebene Kenninformation eine Meldeprozedur bezeichnet,daß die dem gerufenen Teilnehmer mitgeteilte Kenninformation und die Rufnummer des gerufenen Teilnehmers an einem Teilnehmerapparat (TLN) der Vermittlungsanlage gewählt werden, daß die Meldeprozedur auf eine Tabelle zugreift, daß in dieser Tabelle die Daten über den Leitungssatz (AS, QS), an dem ein Suchauftrag die Fernsprechnebenstellenvermittlungsanlage erreicht hat, in Abhängigkeit von der Rufnummer eines gerufenen Teilnehmers eingetragen sind und daß mit Hilfe der Meldeprozedur die gewünschte Verbindung hergestellt wird.

## Claims

1. Method for paging in a telephone private branch exchange with central controller (CC), with central memory means (MEM), and also with central paging device (PSE) which respectively encompasses the call devices (SE) assigned to the persons to be paged as needed, to which call devices, given an accordingly predetermined operating mode of the paging device (PSE), the subscriber line number of the calling subscriber communicated from the central controller (CC) of the paging device (PSE) is transmitted in addition to a paging signal and is reproduced visually or acoustically by said call device (SE), and said line number of the calling subscriber is utilized to connect the calling subscriber to the called subscriber from any subscriber set (TLN) of the telephone private branch exchange, characterized in that if the line number of the calling subscriber is not present the controller (CC) communicates identifier information to the paging device (PSE) as needed, in that as a result of said identifier information, data for indicating the line set (AS, QS) at which the paging request reached the telephone private branch exchange, which data is stored in the memory (MEM) of the telephone private branch exchange, and a subscriber line number of the calling subscriber are assigned to one another, and in that an acknowledgement tone that signals the execution of the paging request is transmitted to the subscriber set (TLN) of the calling subscriber.

2. Method according to Claim 1, characterized in that the identifier information transferred from the controller (CC) of the telephone exchange to the paging device (PSE) indicates an answering procedure, in that the identifier information notified to the called subscriber and the telephone number of the called subscriber are dialled at a subscriber set (TLN) of the exchange, in that the answering procedure accesses a table, in that the data relating to the line set (AS, QS) at which a paging request reached the telephone private branch exchange are entered in this table depending on the telephone number of a called subscriber, and in that the desired connection is established with the aid of the answering procedure.

## Revendications

1. Procédé de recherche de personnes dans une installation de commutation privée téléphonique, comportant un dispositif central (CC) de commande, un dispositif central (MEM) de mémoire, ainsi qu'un dispositif (PSE) central de recherche de personnes, qui comprend des dispositifs (SE) d'appel, qui sont associés aux personnes à rechercher en cas de besoin, auxquels on transmet, dans un mode de fonctionnement, prescrit de manière correspondante, du dispositif (PSE) de recherche de personnes, en plus d'une signalisation d'appel, les numéros de raccordement de l'abonné appelant transmis par le dispositif central (CC) de commande au dispositif (PSE) de recherche de personnes et que l'on restitue, de manière visuelle ou sonore, par ce dispositif (SE) d'appel, ces numéros de raccordement de l'abonné appelant étant utilisés pour relier l'abonné appelant à l'abonné appelé par tout appareil (TLN) d'abonné de l'installation de commutation privée téléphonique,
caractérisé en ce que
le dispositif (CC) de commande transmet, en cas de besoin, en cas d'absence du numéro de l'abonné appelant, une information caractéristique au dispositif (PSE) de recherche de personnes, des données mémorisées dans la mémoire (MEM) de l'installation de commutation privée téléphonique et destinées à désigner le joncteur (AS, QS), où l'ordre de recherche a atteint l'installation de commutation privée téléphonique, et un numéro de raccordement de l'abonné appelé sont associés les uns aux autres par cette information de caractérisation et on transmet à l'appareil (TLN) de l'abonné appelant une tonalité d'accusé de réception, qui signale l'exécution de l'ordre de recherche.

2. Procédé suivant la revendication 1,
caractérisé en ce que
l'information de caractérisation transmise par la commande (CC) de l'installation de commutation téléphonique au dispositif (PSE) de recherche de personnes désigne une procédure de signalement, on choisit l'information de caractérisation communiquée à l'abonné appelé et le numéro d'appel de l'abonné appelé en un appareil (TLN) d'abonné de l'installation de commutation, la procédure de signalement accède à un tableau, les données concernant le joncteur (AS, QS), où un ordre de recherche a atteint l'installation de commutation privée téléphonique, sont portées dans ce tableau en fonction du numéro d'appel d'un abonné appelé et on établit la liaison souhaitée à l'aide de la procédure de signalement.
